# EUROPÄISCHE PATENTSCHRIFT

(11) **EP 0 795 079 B1**
(45) Veröffentlichungstag und Bekanntmachung des Hinweises auf die Patenterteilung: **11.10.2000**
(21) Anmeldenummer: 96920734.9
(22) Anmeldetag: 02.07.1996
(51) Int. Cl.: F02M 37/22

(54) **FLÜSSIGKEITSFILTER MIT EINGEBAUTEM DRUCKREGLER**
LIQUID FILTER WITH INCORPORATED PRESSURE REGULATOR
FILTRE A LIQUIDE AVEC REGULATEUR DE PRESSION INCORPORE

(30) Priorität: 28.09.1995 DE 19536084
(43) Veröffentlichungstag der Anmeldung: 17.09.1997
(73) Patentinhaber: ROBERT BOSCH GMBH, 70442 Stuttgart (DE)
(72) Erfinder: SCHWEGLER, Helmut, D-74385 Pleidelsheim (DE); LUCAS, Bernhard, D-74395 Mundelsheim (DE); BUESER, Wolfgang, D-71691 Freiberg (DE); PROJAHN, Ulrich, E-28109 Madrid (ES)
(86) Internationale Anmeldenummer: DE9601169
(87) Internationale Veröffentlichungsnummer: WO9712143

(56) Entgegenhaltungen:
- EP-A- 0 702 142
- DE-A- 4 430 471
- DE-A- 4 430 852
- DE-U- 9 414 297
- US-A- 3 695 438
- US-A- 4 011 848
- US-A- 5 078 167

## Beschreibung

### Stand der Technik

Die Erfindung geht aus von einem Flüssigkeitsfilter mit eingebautem Druckregler für Kraftstoffe nach der im Oberbegriff des Anspruchs 1 näher angegebenen Gattung.

Es ist schon ein solches Flüssigkeitsfilter mit eingebautem Druckregler für Kraftstoffe aus der US-PS 5 078 167 bekannt, bei der die sonst separaten Bauteile wie Filter und Druckregler in einer gemeinsamen Einheit zusammengefaßt sind und wie sie unter der Bezeichnung Returnless Fuel Systems (RLFS) bekannt sind. Bei diesem Flüssigkeitsfilter arbeitet der Druckregler mit einer Membran, welche von dem zu regelnden Druck am Ablaufanschluß gegen die Kraft einer Feder beaufschlagt ist. Von Nachteil bei diesem Flüssigkeitsfilter ist, daß hier das Filterelement von innen nach außen durchströmt wird, was zu einer beträchtlichen Reduzierung der Standzeit führen kann; infolge von Schmutzablagerungen können sich Brücken bilden, welche die Eintrittsquerschnitte verkleinern, was besonders beim Anfall großer Schmutzmengen kritisch ist. Ferner muß hier der Druck von der Reinseite des Filterelements auf eine Seite der Membran zurückgeführt werden, wozu an der Membran eine aufwendige Kammerbildung erforderlich ist. Ferner ist hier ungünstig, daß der Druckregler zwischen Zulaufanschluß und Tankanschluß geschaltet ist und somit also voll auf der Schmutzseite des Filterelements liegt. Dadurch können Schmutzpartikel in das Ventil des Druckreglers gelangen und dessen Funktion beeinträchtigen. Bei diesem Druckregler stellt das eigentliche Ventil ein von der Membran getrenntes Bauteil dar, was zu einer relativ aufwendigen Bauweise führt, die auch viele Blechformteile benötigt. Die ringförmige Membran muß an ihrem inneren und an ihrem äußeren Rand eingespannt werden, wodurch das Driftrisiko erhöht wird. Außerdem ist dieses Filter zum Einbau in einem Tank ausgebildet und hat einen ungeführten Kraftstoffrücklauf, so daß es sich schlecht zum Anschließen mittels Leitungen eignet. Vor allem aber wird die Funktion des Druckreglers von einem eventuellen Rückstaudruck, wie er besonders bei Verwendung von Strahlpumpen im Tank auftritt, störend beeinflußt.

Ferner ist aus der US-PS 4 011 848 ein Flüssigkeitsfilter mit eingebautem Druckregler bekannt, bei dem das Flüssigkeitsfilter im wesentlichen als Leitungsfilter ausgebildet ist, an dessen entgegengesetzt liegenden Stirnseiten des Gehäuses der Zulaufanschluß und der Ablaufanschluß angeordnet sind. Vom Gehäuse geht radial seitlich ein dritter Anschluß zum Tank ab, in dem als Druckregelventil ein einfaches Kugelventil vorgesehen ist. Ferner ist dem Ablaufanschluß ein zusätzliches Sicherungsventil zugeordnet, das bei Ausfall der Kraftstoffversorgung die Verbindung zum Tank absperren soll. Auch bei diesem Flüssigkeitsfilter ist der Druckregler unmittelbar an die Schmutzseite angeschlossen. Der Druckregler arbeitet hier ohne Membran und ist infolge des verwendeten Kugelventils relativ ungenau und schmutzanfällig. Die zueinander senkrechte Lage der Stutzen für den Ablaufanschluß und den Tankanschluß ist in vielen Einbaufällen sehr ungünstig.

Aus der DE 44 30 852 A1 ist weiterhin ein Flüssigkeitsfilter bekannt, in dessen Gehäusedeckel ein Druckregler so integriert ist, daß das Filterelement von außen nach innen durchströmt wird und der Druckregler auf der Reinseite liegt. Die Ausbildung des Druckreglers im Deckel ist hier nicht erkennbar; der Deckel mit Druckregler beansprucht viel Raum.

Ferner ist aus der DE-U 94 14 297, die als nächstliegender Stand der Technik angesehen werden kann, ein gattungsgemäßes Flüssigkeitsfilter mit eingebautem Druckregler bekannt, bei dem in einem Gehäuse aus einem becherförmigen Gehäuseteil und zugeordnetem Deckel der Druckregler auf der Reinseite eines Filterelements im Deckel integriert ist. Im Gehäuse ist das Filterelement zwischen einen Zulauf- und einen Ablaufanschluß geschaltet, während der Druckregler eine Verbindung von der Reinseite des Filterelements zu einem Tankanschluß steuert. Ungünstig ist, daß der Druckregler ohne Membran arbeitet und lediglich ein kompaktes Sitzventil mit einer federbelasteten Ventilplatte aufweist. Ein derartiger Druckregler arbeitet aber relativ ungenau und wird zudem vom Rückstaudruck im Tankanschluß störend beeinflußt.

Gemäß einem älteren Vorschlag nach EP-A1 0 702 142 weist ein Flüssigkeitsfilter einen integrierten Druckregler mit Membran auf, der zentral im Gehäuse des Filters eingebaut ist und zwischen die Reinseite eines radial von außen nach innen druchströmten Filtereinsatzes und einen Tankanschluß geschaltet ist. Der Druckregler ist hier als gesonderter Modul ausgebildet, bei dem die von einer Feder belastete Membran in einem eigenen Reglergehäuse dicht eingespannt ist, während der Modul selbst dicht im Filtergehäuse eingebaut wird. Das Flüssigkeitsfilter ist als Tankeinbaufilter ausgebildet und baut insgesamt aufwendig, wobei der die Feder aufnehmende Raum in sich geschlossen auf der Reinseite liegt, was die Funktion des Druckreglers störend beeinflussen kann.

Aus der US-A 3 695 438 ist ferner ein Flüssigkeitsfilter mit Druckregler bekannt, der mit einer federbelasteten Membran arbeitet. Dieses Flüssigkeitsfilter hat nur zwei Anschlüsse für Zulauf und Ablauf, wobei der Druckregler wie ein Druckminderventil arbeitet, das den Druck im Ablauf konstant hält; ein Tankanschluß fehlt. Die Membran wird hierbei vom Druck im Ablauf, also von dem stromabwärts vom eigentlichen Ventil herrschenden Druck beaufschlagt, so daß sich auf der Reinseite des Filterelements, also stromaufwärts vom Ventil, ein unerwünscht hoher Druck aufbauen kann. Auch baut die Membran im Durchmesser größer als der Außendurchmesser des Filtereinsatzes, wodurch sie zwischen ein gesondertes Anschlußgehäuse und einen Deckel eingespannt ist, was den Bauaufwand insgesamt erhöht.

### Vorteile der Erfindung

Das erfindungsgemäße Flüssigkeitsfilter mit eingebautem Druckregler für Kraftstoffe mit den kennzeichnenden Merkmalen des Hauptanspruchs hat demgegenüber den Vorteil, daß bei dieser Integration des Druckreglers im Flüssigkeitsfilter eine äußerst einfache, kompakte und kostengünstige Bauweise ermöglicht wird, bei der die Arbeitsweise des Druckreglers unabhängig von irgendwelchen Rückstaudrücken ist; es kann daher ohne weiteres im Zusammenhang mit Strahlpumpen im Tank verwendet werden, da deren Rückstaudruck keinen Einfluß mehr auf die Druckregelung hat. Da der Druckregler nur von der Reinseite her mit Druckmittel beaufschlagt wird, werden alle seine Bauteile nur von gereinigtem Kraftstoff durchflossen, so daß Verschleiß oder Undichtigkeiten aufgrund eingeklemmter Schmutzpartikel ausgeschlossen sind. Zudem läßt sich bei dieser Bauweise erreichen, daß das Filterelement im günstigen Sinn von außen nach innen durchströmt wird und somit gleiche Standzeiten wie bei einem alleinigen Filter erreicht werden. Das Flüssigkeitsfilter mit integriertem Druckregler läßt sich an jedem beliebigen Ort des Fahrzeugs leicht und einfach einbauen; es sind keine zusätzlichen Anschlüsse am Tank notwendig. Die integrierte Bauweise des Druckreglers ermöglicht eine besonders montagefreundliche Konstruktion, die sich wegen ihrer kostengünstigen Bauweise auch für ein Wegwerffilter eignet.Die beim Ansprechen des Druckreglers abströmende Flüssigkeitsmenge kann relativ ungehindert abfließen, wodurch eine kompakte und geringe Baugröße begünstigt wird. Auch die Gefahr von Strömungsgeräuschen und Druckpulsationen wird erheblich reduziert, da der Flüssigkeitsstrom ohne starke Umlenkungen geführt wird und einen im wesentlichen stetigen Verlauf vom Zulauf zum Ablauf aufweist. In günstiger Weise kompensiert der Druckregler einen eventuellen Druckabfall, der durch Zusetzen des Filters entstehen kann, dadurch, daß auf der Reinseite geregelt wird. Der gasgefüllte Federraum im Druckregler ist stets belüftbar, was dessen genaue Arbeitsweise unterstützt.

Durch die in den Unteransprüchen aufgeführten Maßnahmen sind vorteilhafte Weiterbildungen und Verbesserungen des im Anspruch 1 angegebenen Flüssigkeitsfilters mit eingebautem Druckregler möglich. Eine Ausführung nach dem Anspruch 2 begünstigt eine einfache und kompakte Bauweise, die zudem kostengünstig herstellbar ist und deren Montage und Handhabung vorteilhaft ist. Günstig sind ferner Ausführungsformen nach den Ansprüchen 3 bis 5, wobei die Anordnung von Zulaufanschluß und Tankanschluß auf der gleichen Stirnseite des Gehäuses zu kurzen Schlauchverbindungen zwischen Filter und Tank führen. Auch führt die Anordnung des Druckreglers im Gehäuse dazu, daß die bezüglich der Dichtheit kritische Einspannstelle der Membran innerhalb des Filtergehäuses liegt und somit keine zusätzliche Abdichtstelle nach außen entsteht. Auch läßt sich durch die Integration des Druckreglers im Gehäuse ein Bauteil einsparen. Für einen sicheren und lang andauernden Betrieb des Druckreglers ist es günstig, wenn gemäß dem Anspruch 6 ein Entlüftungsanschluß vorgesehen ist. Gemäß den Ansprüchen 7 bis 12 ergeben sich besonders kostengünstige und kompakte Bauweisen, die zudem auch eine einfache Montage erlauben; vorteilhaft ist es dabei, wenn Kunststoffteile eingesetzt werden.

### Zeichnung

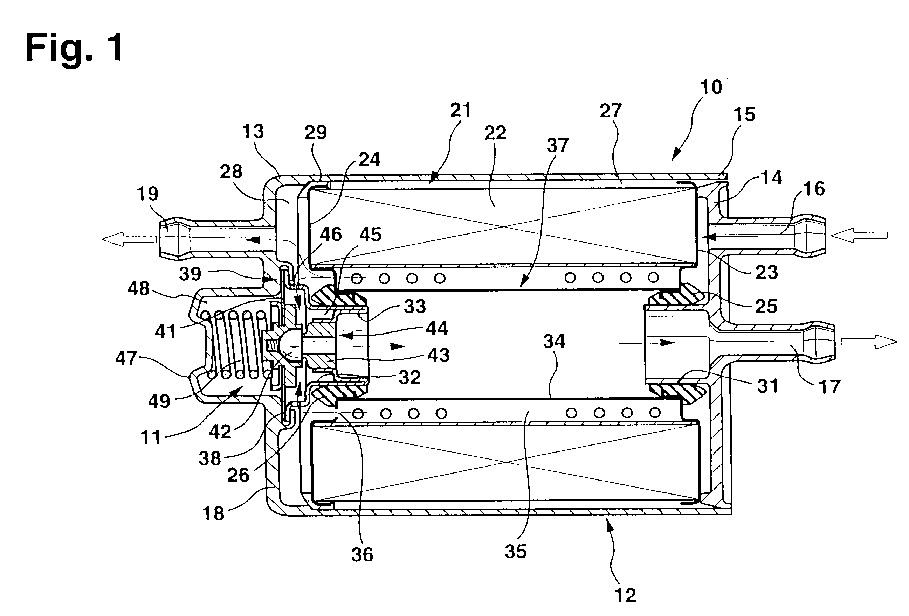

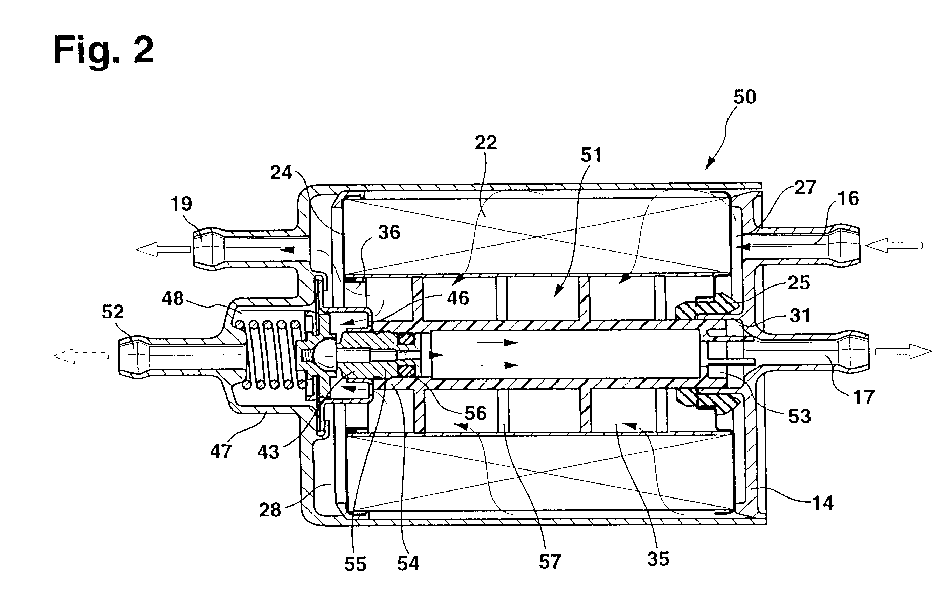

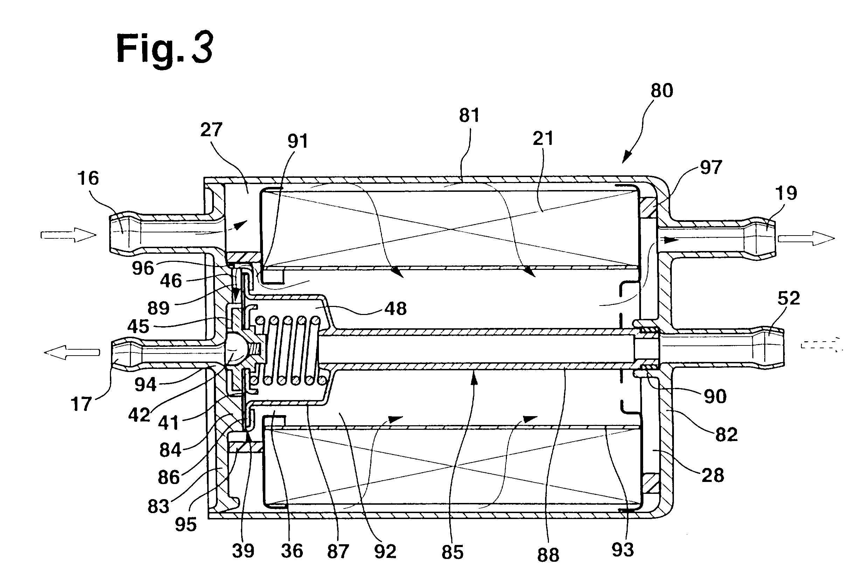

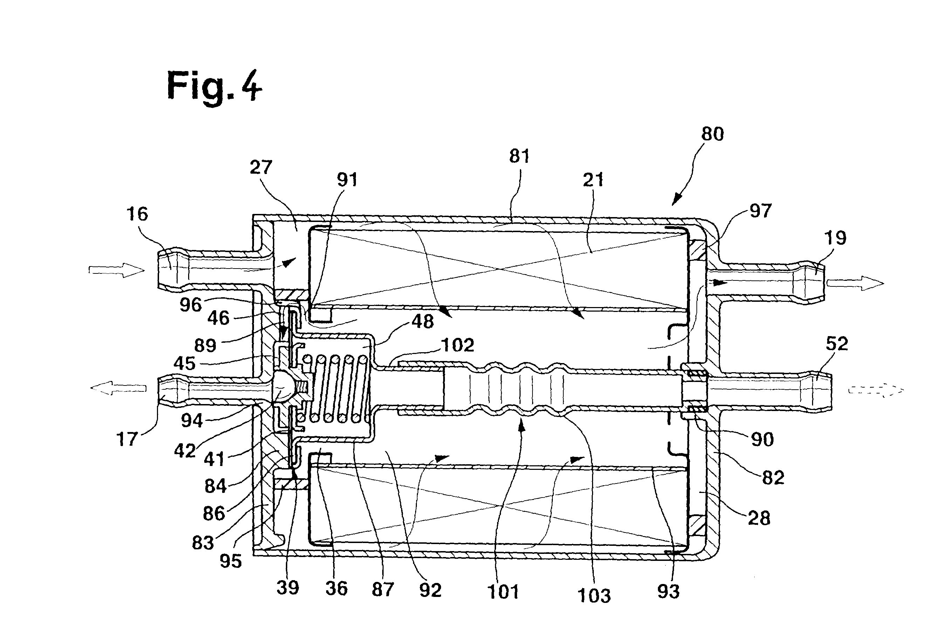

Vier Ausführungsbeispiele der Erfindung sind in der Zeichnung dargestellt und in der nachfolgenen Beschreibung näher erläutert. Es zeigen Figur 1 einen Längsschnitt durch ein erstes Ausführungsbeispiel eines Flüssigkeitsfilters mit eingebautem Druckregler für Kraftstoff in vereinfachter Darstellung, Figur 2 einen Längsschnitt durch ein zweites Ausführungsbeispiel mit Entlüftungsanschluß, Figur 3 ein drittes Ausführungsbeispiel mit Kunststoffbauteilen in vereinfachter Darstellung und Figur 4 einen Längsschnitt durch ein anderes Belüftungsrohr für das Filter nach Figur 3.

### Beschreibung der Ausführungsbeispiele

Die Figur 1 zeigt ein Flüssigkeitsfilter 10 mit eingebautem Druckregler 11 für Kraftstoffe, wobei das Flüssigkeitsfilter 10 im wesentlichen als Leitungsfilter ausgeführt ist und der Druckregler 11 am Boden eines becherförmigen Gehäuseteils integriert ist.

Das Flüssigkeitsfilter 10 weist ein Gehäuse 12 aus Aluminium auf, das im wesentlichen aus einem becherförmigen Gehäuseteil 13 und einem zugehörigen Deckel 14 besteht. Diese beiden Teile 13, 14 sind an ihrem äußeren Rand 15 miteinander verschweißt. An dem Deckel 14 ist ein Zulaufanschluß 16 ausgebildet, über den vom Tank kommender Kraftstoff dem Flüssigkeitsfilter 10 zugeführt wird. Ferner ist am Deckel 14 zentral in der Längsachse ein Tankanschluß 17 ausgebildet, über den beim Ansprechen des Druckreglers 11 Kraftstoff zum Tank abfließen kann. Am becherförmigen Gehäuseteil 13 ist an dessen Boden 18 ein Ablaufanschluß 19 vorgesehen, über den gereinigter Kraftstoff das Flüssigkeitsfilter 10 verläßt und in Richtung Einspritzventile geführt wird. Der Zulaufanschluß 16 und der Ablaufanschluß 19 liegen koaxial zueinander und zur Längsachse radial nach außen versetzt an dessen äußerem Rand. Alle Anschlüsse 16, 17, 19 sind als Rohrstutzen für Schlauchanschluß ausgebildet.

Im Inneren des Gehäuses 12 ist zwischen den Zulaufanschluß 16 und den Ablaufanschluß 19 ein Filterelement 21 geschaltet, das hier einen radial von außen nach innen durchströmten Sterneinsatz 22 aufweist. Im Filterelement 21 ist der Sterneinsatz 22 zwischen stirnseitigen Endkappen 23, 24 in abgedichteter Weise gehaltert, wobei die Endkappen 23, 24 mit ihrem inneren Rand in gleichartige, ringförmige Formdichtungen 25, 26 ragen, mit deren Hilfe eine Abdichtung zwischen der mit dem Zulaufanschluß 16 verbundenen Schmutzseite 27 und der mit dem Ablaufanschluß 19 verbundenen Reinseite 28 hergestellt wird. Zu diesem Zweck ist an der ablaufseitigen Endkappe 24 außen eine dritte Formdichtung 29 angeordnet. Für diese Trennung von Schmutz- und Reinseite ist am Deckel 14 ein nach innen ragender, zentraler Rohrstutzen 31 ausgebildet, auf dem das Filterelement 21 mit seiner Formdichtung 25 gehaltert ist und dabei für eine Abdichtung sorgt. Mit der anderen Formdichtung 26 sitzt das Filterelement 21 auf einem hülsenförmigen Abschnitt 32 eines Trägerteiles 33, das zugleich einen Teil des Druckreglers 11 bildet. In dem Filterelement 21 erstreckt sich zwischen den mehrfach abgesetzten inneren Rändern der Endkappen 23, 24 ein Zentralrohr 34, welches zusammen mit der Innenwand des Sterneinsatzes 22 einen Ringraum 35 begrenzt, der über Öffnungsquerschnitte 36 in der ablaufseitigen Endkappe 24 mit der Reinseite 28 Verbindung hat, während er durch die zulaufseitige Endkappe 23 von der Schmutzseite 27 getrennt ist. Auf diese Weise ist im Filterelement 21 ein doppelwandiges Mittelrohr 37 ausgebildet.

Das Trägerteil 33 ist im wesentlichen als rohrförmiges, im Durchmesser mehrfach abgesetztes Teil ausgebildet, das an seinem zum hülsenförmigen Abschnitt 32 entgegengesetzt liegenden Ende in einen ringförmigen radial verlaufenden Bund 38 ausläuft, mit dem es an der Innenseite des Bodens 18 in einer kreisförmig verlaufenden Einspannstelle 39 dicht befestigt ist. Diese Einspannstelle 39 ist als Bördelstelle ausgebildet und dient zusätzlich dazu, eine kreisrunde, scheibenförmige Membran 41 des Druckreglers 11 an ihrem äußeren Umfang dicht und fest einzuspannen. Die Einspannstelle 39 übernimmt somit eine Doppelfunktion und weist einen möglichst großen Außendurchmesser auf, so daß gerade noch ausreichend Bauraum für den Ablaufanschluß 19 zur Verfügung steht. Die lediglich an ihrem Außenumfang eingespannte Membran 41 weist in ihrer Mitte ein zentrisch angeordnetes Schließglied 42 auf, das hier als Kugelabschnitt ausgeführt ist. Dieses Schließglied 42 arbeitet mit einem gehäusefest angeordneten Ventilsitz 43 zusammen, der im hülsenförmigen Abschnitt 32 des Trägerteils 33 dicht befestigt ist. Ventilsitz 43 und Schließglied 42 bilden das eigentliche Ventil 44 des Druckreglers 11, welches die Verbindung von der Reinseite 28 zum Tankanschluß 17 steuert. Im Druckregler 11 ist auf diese Weise stromaufwärts vom Ventil 44 zwischen der beweglichen Membran 41 und dem Trägerteil 33 ein Druckraum 45 begrenzt, der über mehrere Durchtrittsöffnungen 46 im Trägerteil 33 mit der Reinseite 28 in Verbindung steht, so daß der Kraftstoff ungehindert in den Druckraum 45 strömen und die Membran 41 auf ihrer dem Filterelement 21 zugewandten Seite beaufschlagen kann.

Das becherförmige Gehäuseteil 13 weist an seinem Boden 18 eine nach außen geformte, zentrisch liegende, domförmige Auswölbung 47 auf, die im Inneren des Gehäuses 12 von der Membran 41 überspannt wird. Diese Auswölbung 47 begrenzt zusammen mit der Membran 41 einen Federraum 48, welcher eine Feder 49 des Druckreglers 11 aufnimmt. Die Feder 49 stützt sich einerseits an der Auswölbung 47 und andererseits an der Membrane 41 ab. Die Membran 41 wird hier als dampf dichte Kunststoffscheibe ausgeführt, wie sie auch unter dem Namen Kaptonfolie bekannt ist, so daß eine Diffussion von Kraftstoff in den Federraum 48 vermieden wird und eine Belüftung dieses Federraums 48 nicht erforderlich ist.

Die Wirkungsweise des Flüssigkeitsfilters 10 mit integriertem Druckregler 11 wird wie folgt erläutert:

Der in der Regel von einem Tank kommende Kraftstoff wird dem Flüssigkeitsfilter 10 über den Zulaufanschluß 16 zugeführt und gelangt im Inneren des Gehäuses 12 auf dessen Schmutzseite 27. Der Kraftstoff durchströmt radial von außen nach innen den Sterneinsatz 22, gelangt gereinigt in den Ringraum 35 und über die Öffnungsquerschnitte 36 in der ablaufseitigen Endkappe 24 zur Reinseite 28 und weiter zum Ablaufstutzen 19 in Richtung der Verbraucher, die im vorliegenden Fall Einspritzventile sind. Der auf der Reinseite 28 herrschende Druck wirkt über die Durchtrittsöffnungen 46 im Trägerteil 33 auch stromaufwärts vom Ventil 44 in dem Druckraum 45 und damit auf die dem Filterelement 21 zugewandte Seite der Membran 41, welche in entgegengesetzter Richtung von der Feder 49 belastet wird. Über die Feder 49 wird dabei ein bestimmter Druck voreingestellt. Wird dieser voreingestellte Druck im Druckregler 11 überschritten, so öffnet das Ventil 44 und Kraftstoff strömt von der Reinseite 28 über den Druckraum 45, das geöffnete Ventil 44 in das Zentralrohr 34 hinein und weiter über den Tankanschluß 17 zu einem Rücklaufbehälter. Beim Öffnen des Ventils 44 hebt das in der Membran 41 beweglich gelagerte Schließglied 42 von dem gehäusefesten Ventilsitz 43 ab. Da der Druckregler 11 nur noch von der Reinseite 28 her beaufschlagt wird, werden alle seine Bauteile nur von gereinigtem Kraftstoff durchflossen und somit Verschleiß oder Undichtigkeiten aufgrund von Schmutzpartikeln ausgeschlossen. Ferner ist durch die Anordnung des Filterelements 21 gewährleistet, daß es radial von außen nach innen durchströmt wird und somit hohe Standzeiten erreichbar sind. Durch die Ausbildung aller Anschlußstutzen 16, 17, 19 am Gehäuse 12, insbesondere in axialer Richtung, läßt sich das Flüssigkeitsfilter 10 leicht und mit geringem Aufwand in einem Fahrzeug einbauen. Das Gehäuseteil 13 bildet mit dem integrierten Druckregler 11 eine vormontierbare Montagegruppe, die leicht handhabbar und montierbar ist und eine Voreinstellung des Druckreglers 11 erlaubt. Durch die Lage der Einspannstelle 39 für die Membran 41 im Inneren des Gehäuses 12 entfällt eine zusätzliche Abdichtung nach außen hin, so daß das Dichtheitsproblem erheblich reduziert ist. Die Ausbildung von Tankanschluß 17 und Zulaufanschluß 16 an der gleichen Stirnseite des Gehäuses ermöglicht relativ kurze Schlauchverbindungen zwischen Flüssigkeitsfilter 10 und Tank. Die gehäuseseitige Integration des Druckreglers 11 ermöglicht eine äußerst kompakte, einfache und kostengünstige Bauweise, zumal das Gehäuseteil 13 Abdichtfunktionen sowohl für das Flüssigkeitsfilter 10 wie auch für den Druckregler 11 übernimmt. Durch die Lage des Druckreglers 11 im Gehäuse werden die Korrosionsanforderungen an dessen Bauteile reduziert, so daß einfachere Materialien bei seiner Herstellung verwendet werden können.

Die Figur 2 zeigt einen Längsschnitt durch ein zweites Flüssigkeitsfilter 50, das sich vom Flüssigkeitsfilter 10 nach Figur 1 wie folgt unterscheidet, wobei für gleiche Bauelemente gleiche Bezugszeichen verwendet werden.

Das zweite Flüssigkeitsfilter 50 unterscheidet sich vor allem dadurch, daß es als doppelwandiges Mittelrohr 37 ein Kunststoffrohr 51 verwendet und am Federraum 48 ein Entlüftungsanschluß 52 angebracht ist. Das Kunststoffrohr 51 ist mit seinem auf der Schmutzseite 27 gelegenen Ende 53 in dem Rohrstutzen 31 des Deckels 14 geführt und dient zugleich zur Abstandshalterung des Deckels 14 im becherförmigen Gehäuseteil 13. Die Abdichtung übernimmt die Formdichtung 25, die zugleich am Ende 53 anliegt. Mit seinem anderen, auf der Reinseite 28 gelegenen Ende 54 ist das Kunststoffrohr 51 auf einer hülsenförmigen Verlängerung 55 des Ventilsitzes 43 geführt und durch einen O-Ring 56 abgedichtet. Am Außenumfang des Kunststoffrohres 51 liegen radial verlaufende Stege 57, welche bis an den Sterneinsatz 22 heranführen, den Ringraum 35 bilden und im Bereich der reinseitigen Endkappe 24 die Öffnungsquerschnitte 36 freihalten. Die Durchtrittsöffnungen 46 am Trägerteil 33 sind nun so angeordnet, daß sie in axialer Richtung durchströmt werden. Mit Hilfe des Kunststoffrohrs 51 läßt sich bei einfacher Bauweise eine kostengünstige Lösung erreichen, die zudem leicht montierbar ist. Mit Hilfe des Entlüftungsanschlusses 52 kann der Federraum 48 nun ständig belüftet werden, so daß für die Membran 41 eine einfachere und billigere Bauweise möglich ist. Zudem läßt sich in an sich bekannter Weise der Ansprechdruck des Druckreglers 11 über den Entlüftungsanschluß 52 beeinflussen. Im übrigen entspricht die Wirkungsweise des zweiten Flüssigkeitsfilters 50 derjenigen des ersten Flüssigkeitsfilters 10 nach Figur 1.

Das Kunststoffrohr 51 übernimmt mehrere Funktionen; es dient zur Zentrierung des Sterneinsatzes 22 und zur Rückführung der Kraftstoff-Rücklaufmenge und stützt den Sterneinsatz 22 nach innen ab, wenn der durchströmende Kraftstoff von außen auf das verschmutzte Filterpapier drückt und es nach innen zu belastet.

Die Figur 3 zeigt einen Längsschnitt durch ein drittes Flüssigkeitsfilter 80, das sich vom ersten Flüssigkeitsfilter 10 nach Figur 1 vor allem durch die Integration des Druckreglers 11 am Deckel und eine durchgeleitete Entlüftung unterscheidet, wobei für gleiche Bauelemente wie in Figur 1 gleiche Bezugszeichen verwendet werden.

Beim Flüssigkeitsfilter 80 hat das becherförmige Gehäuseteil 81 an seinem Boden 82 einen zentral angeordneten Entlüftungsanschluß 52, während der Ablaufanschluß 19 radial zu letzterem nach außen hin versetzt angeordnet ist. Am Deckel 83 liegt koaxial zum Entlüftungsanschluß 52 und somit zentrisch der Tankanschluß 17, während der Zulaufanschluß 16 koaxial zum Ablaufanschluß 19 angeordnet ist. Der Druckregler 11 ist im Bereich des Tankanschlusses 17 an der Innenseite des Deckels 83 angebaut, wozu am Deckel 83 auf dessen Innenseite ein axial in das Gehäuseinnere ragender, Ringsteg 84 ausgeführt ist. Am auskragenden Ende dieses Ringsteges 84 befindet sich die Einspannstelle 39 für die Membran 41, wobei in diese Einspannstelle 39 zusätzlich ein Belüftungsrohr 85 mit seinem radialen Flansch 86 dicht und fest eingespannt ist. Das Belüftungsrohr 85 geht ausgehend von seinem Flansch 86 in einen aufgeweiteten Hülsenabschnitt 87 über, welcher im wesentlichen den Federraum 48 einschließt, und der anschließend in ein Rohrteil 88 mit kleinerem Durchmesser übergeht, das mit seinem freien Ende in einem vom Entlüftungsanschluß 52 ausgehenden Stutzen 90 ragt und dort abgedichtet ist. Dieses Belüftungsrohr 85 läßt sich kostengünstig aus Kunststoff herstellen. In dem Ringsteg 84 sind die Durchtrittsöffnungen 46 zum Druckraum 45 als radial verlaufende Bohrungen 89 ausgeführt, die über Kanäle 91 und die Öffnungsquerschnitte 36 mit dem Ringraum 92 zwischen Mittelrohr 93 und Belüftungsrohr 85 Verbindung haben und somit weiter mit der Reinseite 28 und dem Ablaufanschluß 19 in Verbindung stehen. Das Schließglied 42 des Druckreglers 11 arbeitet mit einem Ventilsitz 94 zusammen, der hier unmittelbar an der Innenseite des Deckels 83 in Verlängerung des Tankanschlusses 17 ausgebildet ist. Der Ringsteg 84 ist an seinem Außenumfang von einem Stützring 95 umgeben, der von am Deckel 83 befestigten Rippen 96 radial zentriert ist und der sich zwischen dem Deckel 83 und der Endkappe des Filterelements 21 abstützt. Der Zulaufanschluß 16 liegt radial gesehen außerhalb dieses Stützringes 95, der somit die Schmutzseite 27 von der Reinseite 28 trennt. Das Filterelement 21 stützt sich auf der dem Stützring 95 gegenüberliegenden Seite über einen dichtenden Haltering 97 am Boden 82 des Gehäuseteils 81 ab. Zur Trennung von Schmutzseite 27 und Reinseite 28 ist der Durchmesser dieses Halterings 97 so gewählt, daß er in radialer Richtung gesehen außerhalb des Ablaufanschlusses 19 liegt.

Das Flüssigkeitsfilter 80 ermöglicht durch die Integration des Druckreglers 11 unmittelbar am Deckel 83 nahe dem zentrisch angeordneten Tankanschluß 17 in Verbindung mit dem als Kunststoffrohr ausgeführten Belüftungsrohr 85 eine besonders kompakte und kostengünstige Bauweise.

Die Wirkungsweise des dritten Flüssigkeitsfilters 80 ist prinzipiell vergleichbar mit der des ersten Flüssigkeitsfilters 10, wobei zusätzlich der Federraum 48 über das Belüftungsrohr 85 und den Entlüftungsstutzen 52 nach außen entlüftet ist. Der zuströmende Kraftstoff gelangt vom Zulaufanschluß 16 auf die Schmutzseite 27 des Filters 80, durchströmt radial von außen nach innen das Filterelement 21 und gelangt über den Ringraum 92 zur Reinseite 28 und weiter zum Ablaufanschluß 19. Der Druck auf der Reinseite 28 kann sich über die Kanäle 91 und die Bohrungen 89 auch im Druckraum 45 aufbauen und die Membran 41 gegen die Kraft der Feder belasten. Bei Überschreiten des Ansprechdruckes wird Kraftstoff aus dem Druckraum 45 über den Tankanschluß 17 abgesteuert.

Das dritte Flüssigkeitsfilter 80 hat, ebenso wie die Flüssigkeitsfilter 10, 50, den Vorteil, daß der Druckregler 11 gegenüber einem eventuell auftretenden Rückstaudruck im Tankanschluß 17 unempfindlich ist. Der über den Tankanschluß 17 abströmende Kraftstoff kann daher über eine Strahlpumpe im Tank geführt werden, wobei der auftretende Rückstaudruck keinen Einfluß auf die Reglerfunktion ausübt. Der Rückstaudruck kann nur auf die relativ kleine, wirksame Fläche des Schließgliedes 42 wirken, nicht aber im Druckraum 45 auf die relativ große wirksame Fläche der Membran 41, so daß die Regelfunktion des Druckreglers 11 nicht störend beeinflußt wird.

Die Figur 4 zeigt einen Längsschnitt durch einen Filter mit einem anderen Belüftungsrohr 101, wie es anstelle des Belüftungsrohrs 85 beim dritten Flüssigkeitsfilter 80 nach Fig. 3 verwendbar ist. Das Belüftungsrohr 101 hat ein als Tiefziehblechteil ausgebildetes Federgehäuse 102 und ein als flexibles Kunststoffrohr ausgebildetes Wellrohr 103. Bei dieser Bauweise kann der Druckregler durch Stauchen des Federgehäuse 102 eingestellt werden, wobei die Federvorspannung durch Eindrücken erhöht wird. Die Forderung nach Koaxialität zwischen Druckregler und Belüftungsrohr ist hier hinfällig. Eine Längenausdehnung des Filters bei Druckbeaufschlagung wirkt sich nicht auf das eingestellte Federgehäuse 102 aus. Auch ein möglicher Schiefstand von Federgehäuse 102 und Wellrohr 103 zum Stutzen 90 ist unerheblich. Ferner läßt sich der Deckel 83 mit angebautem Belüftungsrohr 101 günstiger transportieren und handhaben, was bei getrennter Fertigung von Druckregler und Filter von Interesse ist. Die Bauweise nach Figur 4 ist daher besonders vorteilhaft.

Selbstverständlich sind an den gezeigten Ausführungsformen Änderungen möglich, ohne vom Gedanken der Erfindung abzuweichen. Die Flüssigkeitsfilter mit integriertem Druckregler 11 lassen sich ohne weiteres so ausgestalten, daß sie neben einer Bauweise aus Aluminium, Stahl und Kunststoff auch eine Bauweise mit gemischtem Werkstoffen ermöglichen; insbesondere können in der Druckreglerbaugruppe anstelle der Blechteile mehr Kunststoffteile verwendet werden. Anstelle des Sitzventils kann der Druckregler auch mit einem Schieberventil ausgerüstet sein.

## Patentansprüche

1. Flüssigkeitsfilter mit eingebautem Druckregler für Kraftstoff und mit einem Gehäuse (12), in dem ein Filterelement (21)angeordnet ist, das zwischen einen mit einer Schmutzseite (27) verbundenen Zulaufanschluß (16) und einen mit der Reinseite (28) des Flüssigkeitsfilters (10, 50, 80) verbundenen Ablaufanschluß (19) geschaltet und radial von außen nach innen durchströmt ist, und bei dem das Gehäuse (12) aus einem becherförmigen Gehäuseteil (13, 81) und einem dessen offenes Ende verschließenden Deckel (14, 83) besteht und neben dem Zulauf- (16) und Ablaufanschluß (19) einen Tankanschluß (17) aufweist, über welchen beim Ansprechen des in das Gehäuse (12) stirnseitig integrierten Druckreglers (11) über dessen Ventil strömende Flüssigkeit abströmt, wobei der Druckregler (11) zwischen die Reinseite (28) und den Tankanschluß (17) geschaltet ist, dadurch gekennzeichnet, daß der Druckregler (11) eine im Gehäuse (12) dicht eingespannte Membran (41) aufweist, die von einem Flüssigkeitsdruck entgegen einer Feder (49) belastet ist und davon abhängig das Ventil (44) des Druckreglers (11) steuert, wobei die Membran (41) eine einzige, an ihrem Außenumfang liegende Einspannstelle (39) im Gehäuse (12) aufweist und in ihrer Mitte ein bewegliches Schließglied (42) bildet, das mit einem gehäusefesten Ventilsitz (43, 94) des Druckreglers (11) zusammenarbeitet, wobei die Membran (41) einen gasgefüllten Federraum (48) von einem mit Flüssigkeitsdruck beaufschlagten Druckraum (45) trennt und der gehäusefeste Ventilsitz (43, 94) mit dem Tankanschluß (17) verbunden ist, und daß das Filterelement (21) ein doppelwandiges Mittelrohr (37, 51, 85, 101) aufweist, das mit seinen Enden einerseits am Druckregler (11) und andererseits am Deckel (14) bzw. am Boden (82) des Gehäuseteils (81) dichtend abgestützt ist, so daß auf der Reinseite (28) des Filterelements (21) ein mit dem Ablaufanschluß (19) verbundener Ringraum (35) von einem an den Druckregler (11) angeschlossenen, innerhalb des Mittelrohrs (37, 51, 85, 101) verlaufenden Kanal durchdrungen ist.

2. Flüssigkeitsfilter nach Anspruch 1, dadurch gekennzeichnet, daß der Druckregler (11) rotationssymetrisch aufgebaut ist und zusammen mit dem Tankanschluß (17) auf der Längsachse des Flüssigkeitsfilters (10, 50, 80) angeordnet ist, wobei die Anschlüsse für Zulauf (16), Ablauf (19) und Tank (17) am Boden (18, 82) des Gehäuseteils (13, 81) und am Deckel (14, 83) ausgebildet sind, insbesondere als zueinander parallele Stutzen.

3. Flüssigkeitsfilter nach Anspruch 1 oder 2, dadurch gekennzeichnet, daß das becherförmige Gehäuseteil (13) an seinem Boden (18) eine nach außen ragende, domförmige Auswölbung (47) aufweist, die im Gehäuseinneren von der Membran (41) überspannt wird und die den Federraum (48) begrenzt, daß am Boden (18) radial außerhalb der Einspannstelle (39) der Membran (41) der Ablaufanschluß (19) ausgebildet ist und daß am Deckel (14) zentrisch der Tankanschluß (17) und exzentrisch dazu der Zulaufanschluß (16) liegen, der insbesondere koaxial zum Ablaufanschluß (19) angeordnet ist.

4. Flüssigkeitsfilter nach Anspruch 3, dadurch gekennzeichnet, daß der Druckregler (11) ein rohrförmiges Trägerteil (33) hat, das zusammen mit der Membran (41) am Boden (18) dicht befestigt ist und das an seinem inneren Rand den Ventilsitz (43) des Druckreglers (11) trägt, daß am Außenumfang des Trägerteils (33) über eine hülsenförmige Formdichtung (26) das Mittelrohr (37) mit seinem einen Ende gelagert ist, während dessen anderes Ende über eine gleiche Formdichtung (25) an einem nach innen ragenden Rohrstutzen (31) des Deckels (14) dicht abgestützt ist und daß das Trägerteil (33) die Reinseite (28) des Filterelements (21) mit dem Druckraum (45) des Druckreglers (11) verbindende Durchtrittsöffnungen (46) aufweist.

5. Flüssigkeitsfilter nach einem der Ansprüche 1 bis 3, dadurch gekennzeichnet, daß das Mittelrohr ein Kunststoffrohr (51) aufweist, das mit seinem einen Ende (54) auf einer hülsenförmigen Verlängerung (55) des Ventilsitzes (43) dichtend geführt ist, welcher Ventilsitz (43) in einem mit der Membran (41) am Boden (18) des Gehäuseteils (13) eingespannten Trägerteil (33) befestigt ist und daß das Kunststoffrohr (51) mit seinem anderen Ende (53) im Deckel (14) geführt und über eine Formdichtung (25) abgedichtet ist, daß das Kunststoffrohr (51) außen den Ringraum (35) bildende Stege (57) aufweist und daß das Trägerteil (33) die Reinseite (28) des Filterelements (21) mit dem Druckraum (45) des Druckreglers (11) verbindende Durchtrittsöffnungen (46) aufweist.

6. Flüssigkeitsfilter nach Anspruch 4 oder 5, dadurch gekennzeichnet, daß am Federraum (48) ein Entlüftungsanschluß (52) angeordnet ist, der insbesondere koaxial zum Tankanschluß (17) liegt.

7. Flüssigkeitsfilter nach einem der Ansprüche 1 oder 2, dadurch gekennzeichnet, daß das Gehäuse (12) des Filters (80) am Boden (82) seines becherförmigen Gehäuseteils (81) den Ablaufanschluß (19) und einen zentrisch liegenden Entlüftungsanschluß (52) aufweist und an dem das Gehäuseteil (81) verschließenden Deckel (83) zentral der Tankanschluß (17) und dazu radial versetzt der Zulaufanschluß (16) angeordnet sind und daß innen am Deckel (83) im wesentlichen koaxial zum Tankanschluß (17) der Druckregler (11) angeordnet ist.

8. Flüssigkeitsfilter nach Anspruch 7, dadurch gekennzeichnet, daß die Einspannstelle (39) der Membran (41) unmittelbar am Deckel (83) angeordnet ist und zugleich zur Befestigung eines Belüftungsrohrs (85; 101) dient, das den Federraum (48) des Druckreglers (11) bildet und diesen Federraum (48) über einen zur Entlüftung dienenden Kanal (88) in seinem Inneren mit dem Entlüftungsanschluß (52) verbindet.

9. Flüssigkeitsfilter nach Anspruch 7 oder 8, dadurch gekennzeichnet, daß die Einspannstelle (39) an einem am Deckel (83) axial nach innen ragenden Ringsteg (84) angeordnet ist, der zur Verbindung der Reinseite (28) des Filterelements (21) mit dem Druckraum (45) des Druckreglers (11) radiale Durchgänge (89) aufweist und der von einem Stützring (95) umgeben ist, der sich dichtend zwischen dem Deckel (83) und die zugewandte Endkappe des Filterelements (21) abstützt und der zur Trennung von Schmutz- (27) und Reinseite (28) radial zwischen Tankanschluß (17) und Zulaufanschluß (16) liegt und daß ein Haltering (97) zwischen reinseitiger Endkappe und Boden (82) den Ablaufstutzen (19) von der Schmutzseite (27) trennt.

10. Flüssigkeitsfilter nach einem der Ansprüche 8 oder 9, dadurch gekennzeichnet, daß das Belüftungsrohr (85, 101) mit einem radial sich erstreckenden Flansch (86) in der Einspannstelle (39) dicht befestigt ist und in einen aufgeweiteten Hülsenabschnitt (87) übergeht, welcher den Federraum (48) bildet, und daß der Hülsenabschnitt (87) in ein Rohrteil (88; 103) mit kleinerem Durchmesser übergeht, dessen freies Ende im Boden (82) abgedichtet geführt ist.

11. Flüssigkeitsfilter nach einem der Ansprüche 8 bis 10, dadurch gekennzeichnet, daß das Belüftungsrohr (85) einstückig baut und insbesondere aus Kunststoff besteht.

12. Flüssigkeitsfilter nach einem der Ansprüche 8 bis 10, dadurch gekennzeichnet, daß das Belüftungsrohr (101) aus einem metallischen Federgehäuse (102) und einem flexiblen Kunststoffrohr (103) besteht.

## Claims

1. Liquid filter with incorporated pressure regulator for fuel and with a housing (12), in which is arranged a filter element (21) which is inserted between an inflow connection (16) connected to a dirty side (27) and an outflow connection (19) connected to the clean side (28) of the liquid filter (10, 50, 80) and through which the flow passes radially from the outside inwards, and in which the housing (12) consists of a bowl-shaped housing part (13, 81) and of a cover (14, 83) closing the open end of the latter and has, in addition to the inflow connection (16) and outflow connection (19), a tank connection (17), via which, when the pressure regulator (11) integrated into the housing (12) on the end face responds, liquid flowing via the valve of the said pressure regulator flows out, the pressure regulator (11) being inserted between the clean side (28) and the tank connection (17), characterized in that the pressure regulator (11) has a diaphragm (41) which is clamped sealingly in the housing (12) and which is loaded by a liquid pressure counter to a spring (49) and controls the valve (44) of the pressure regulator (11) as a function of the said liquid pressure, the diaphragm (41) having a single clamping point (39), located on its outer circumference, in the housing (12) and, in its centre, forming a movable closing member (42) which cooperates with a valve seat (43, 94), fixed to the housing, of the pressure regulator (11), the diaphragm (41) separating a gas-filled spring space (48) from a pressure space (45) loaded with liquid pressure, and the valve seat (43, 94) fixed to the housing being connected to the tank connection (17), and in that the filter element (21) has a double-walled middle tube (37, 51, 85, 101) which is supported sealingly with its ends, on the one hand, on the pressure regulator (11) and, on the other hand, on the cover (14) or on the bottom (82) of the housing part (81), so that, on the clean side (28) of the filter element (21), an annular space (35) connected to the outflow connection (19) has passing through it a duct connected to the pressure regulator (11) and running within the middle tube (37, 51, 85, 101).

2. Liquid filter according to Claim 1, characterized in that the pressure regulator (11) is of rotationally symmetrical design and is arranged, together with the tank connection (17), on the longitudinal axis of the liquid filter (10, 50, 80), the connections for the inflow (16), outflow (19) and tank (17) being formed on the bottom (18, 82) of the housing part (13, 81) and on the cover (14, 83), particularly as connection pieces parallel to one another.

3. Liquid filter according to Claim 1 or 2, characterized in that the bowl-shaped housing part (13) has, on its bottom (18), an outwardly projecting dome-shaped bulge (47) which is spanned by the diaphragm (41) in the housing interior and which delimits the spring space (48), in that the outflow connection (19) is formed on the bottom (18) radially outside the clamping point (39) of the diaphragm (41), and in that the tank connection (17) lies centrically and the inflow connection (16) eccentrically to the latter on the cover (14), the said inflow connection being arranged, in particular, coaxially to the outflow connection (19).

4. Liquid filter according to Claim 3, characterized in that the pressure regulator (11) has a tubular carrier part (33) which, together with the diaphragm (41), is fastened sealingly to the bottom (18) and which, at its inner edge, carries the valve seat (43) of the pressure regulator (11), in that the middle tube (37) is mounted at one end on the outer circumference of the carrier part (33) via a sleeve-shaped form seal (26), whilst the other end of the said middle tube is supported sealingly, via an identical form seal (25), on a inwardly projecting tubular stub (31) of the cover (14), and in that the carrier part (33) has passage orifices (46) connecting the clean side (28) of the filter element (21) to the pressure space (45) of the pressure regulator (11).

5. Liquid filter according to one of Claims 1 to 3, characterized in that the middle tube has a plastic tube (51) which is guided sealingly with one end (54) on a sleeve-shaped extension (55) of the valve seat (43), the said valve seat (43) being fastened in a carrier part (33) clamped to the bottom (18) of the housing part (13) by means of the diaphragm (41), and in that the plastic tube (51) is guided with its other end (53) in the cover (14) and is sealed off via a form seal (25), in that the plastic tube (51) has on the outside webs (57) forming the annular space (35), and in that the carrier part (33) has passage orifices (46) connecting the clean side (28) of the filter element (21) to the pressure space (45) of the pressure regulator (11).

6. Liquid filter according to Claim 4 or 5, characterized in that a venting connection (52) which lies, in particular, coaxially to the tank connection (17) is arranged on the spring space (48).

7. Liquid filter according to one of Claims 1 or 2, characterized in that the housing (12) of the filter (80) has, on the bottom (82) of its bowl-shaped housing part (81), the outflow connection (19) and a centrically lying venting connection (52), and the tank connection (17) is arranged centrally and the inflow connection (16), so as to be offset radially to the latter, on the cover (83) closing the housing part (81), and in that the pressure regulator (11) is arranged on the inside of the cover (83) essentially coaxially to the tank connection (17).

8. Liquid filter according to Claim 7, characterized in that the clamping point (39) of the diaphragm (41) is arranged directly on the cover (83) and serves at the same time for fastening an aerating tube (85; 101) which forms the spring space (48) of the pressure regulator (11) and, in its interior, connects this spring space (48) to the venting connection (52) via a duct (88) serving for venting.

9. Liquid filter according to Claim 7 or 8, characterized in that the clamping point (39) is arranged on an annular web (84) which projects axially inwards on the cover (83) and has radial passages (89) for connecting the clean side (28) of the filter element (21) to the pressure space (45) of the pressure regulator (11) and which is surrounded by a supporting ring (95) which is supported sealingly between the cover (83) and the confronting end cap of the filter element (21) and which lies radially between the tank connection (17) and inflow connection (16) in order to separate the dirty side (27) and clean side (28), and in that a holding ring (97) between the clean-side end cap and the bottom (82) separates the outflow connection (19) from the dirty side (27).

10. Liquid filter according to one of Claims 8 or 9, characterized in that the aerating tube (85, 101) is fastened sealingly in the clamping point (39) by means of a radially extending flange (86) and merges into a widened sleeve portion (87) which forms the spring space (48), and in that the sleeve portion (87) merges into a tubular part (88; 103) of smaller diameter, the free end of which is guided, sealed off, in the bottom (82).

11. Liquid filter according to one of Claims 8 to 10, characterized in that the aerating tube (85) is designed in one piece and consists, in particular, of plastic.

12. Liquid filter according to one of Claims 8 to 10, characterized in that the aerating tube (101) consists of a metallic spring housing (102) and of a flexible plastic tube (103).

## Revendications

1. Filtre à liquide avec un régulateur de pression incorporé pour carburant et avec un boîtier (12), dans lequel est disposé un élément de filtre (21), qui est monté entre un raccord d'arrivée (16), relié à un côté sale (27), et un raccord de départ (19), relié au côté propre (28) du filtre à liquide (10, 50, 80), le filtre étant parcouru radialement par le liquide de l'extérieur vers l'intérieur, et le boîtier (12) consistant en une partie de boîtier (13, 81) en forme de coupe et en un couvercle (14, 83) obturant l'une de ses extrémités ouvertes, le filtre présentant en plus du raccord d'arrivée (16) et du raccord de départ (19) un raccord de réservoir (17), pour évacuer du liquide, coulant par la vanne, lorsque le régulateur de pression (11), incorporé du côté frontal dans le boîtier (12) réagit, le régulateur de pression (11) étant monté entre le côté propre (28) et le raccord de réservoir (17),
caractérisé en ce que
- le régulateur de pression (11) présente une membrane insérée de façon étanche dans le boîtier (12), comprimée par une pression du liquide à l'encontre d'un ressort (49), membrane (41) qui commande en fonction de cela la vanne (44) du régulateur de pression (11), qui présente un unique emplacement d'insertion (39) sur son pourtour extérieur dans le boîtier (12) et qui forme en son milieu un organe d'obturation mobile (42), coopérant avec un siège de vanne (43, 94), solidaire du boîtier, du régulateur de pression (11), la membrane (41) séparant une chambre de ressort (48), remplie de gaz, d'une chambre sous pression (45), alimentée par le liquide sous pression, alors que le siège de la vanne (43, 94), solidaire du boîtier, est relié au raccord de réservoir (17), et
- l'élément de filtre (21) présente un tube central (37, 51, 85, 101) à double paroi, qui prend appui de façon étanche par ses extrémités, d'une part, sur le régulateur de pression (11) et, d'autre part, sur le couvercle (14) ou sur le fond (82) de la partie (81) du boîtier, de telle sorte qu'un canal s'étendant à l'intérieur du tube central (37, 51, 85, 101), qui est raccordé au régulateur de pression (11), passe à travers un espace annulaire (35), relié au raccord de départ (19).

2. Filtre à liquide selon la revendication 1,
caractérisé en ce que
le régulateur de pression (11) est symétrique de révolution et est disposé en même temps que le raccord de réservoir (17) sur l'axe longitudinal du filtre à liquide (10, 50, 80), les raccords d'arrivée (16), de départ (19) et de réservoir (17) étant constitués sur le fond (18, 82) de la partie (13, 81) du boîtier et sur le couvercle (14, 83), en particulier sous la forme d'ajutages parallèles les uns aux autres.

3. Filtre à liquide selon la revendication 1 ou 2,
caractérisé en ce que
- la partie (13) du boîtier en forme de coupe présente sur son fond (18) un renflement (47) en forme de dôme, saillant vers l'extérieur, qui est surplombé à l'intérieur du boîtier par la membrane (41) et qui délimite la chambre de ressort (48),
- le raccord de départ (19) est constitué sur le fond (18) radialement en dehors de l'emplacement d'insertion (39) de la membrane (41), et
- sur le couvercle (14) se trouvent au centre le raccord de réservoir (17) et de façon excentrée le raccord d'arrivée (16), qui est disposé en particulier de façon coaxiale par rapport au raccord de départ (19).

4. Filtre à liquide selon la revendication 3,
caractérisé en ce que
- le régulateur de pression (11) a une pièce de support (33) de forme tubulaire, qui est fixée de façon étanche en même temps que la membrane (41) sur le fond (18) et qui porte sur son bord intérieur le siège de la vanne (43) du régulateur de pression (11),
- le tube central (37) est monté par l'une de ses extrémités sur le pourtour extérieur de la pièce de support (33) au moyen d'un joint d'étanchéité moulé (26), en forme de manchon, tandis que son autre extrémité prend appui de façon étanche au moyen d'un joint d'étanchéité moulé (25) identique sur un ajutage tubulaire (31) du couvercle (14), saillant vers l'intérieur, et
- la pièce de support (33) présente des orifices de passage (46) reliant le côté propre (28) de l'élément de filtre (21) avec la chambre de pression (45) du régulateur de pression (11).

5. Filtre à liquide selon l'une des revendications 1 à 3,
caractérisé en ce que
- le tube central présente un tube (51) en matière plastique, qui passe de façon étanche par l'une de ses extrémités (54) sur un prolongement (55) en forme de manchon du siège de la vanne (43), qui est fixé dans une pièce de support (33) insérée avec la membrane (41) sur le fond (18) de la partie (13) du boîtier,
- on fait passer le tube en matière plastique (51) par son autre extrémité (53) dans le couvercle (14) et on assure son étanchéité au moyen d'un joint d'étanchéité moulé (25),
- le tube en matière plastique (51) présente des entretoises (57) formant à l'extérieur la chambre annulaire (35) et
- la pièce de support (33) présente le côté propre (28) de l'élément de filtre (21) avec des orifices de passage (46) reliant la chambre sous pression (45) du régulateur de pression (11).

6. Filtre à liquide selon la revendication 4 ou 5,
caractérisé en ce que
sur la chambre de ressort (48), un raccord de désaération (52) est disposé en particulier coaxial par rapport au raccord de réservoir (17).

7. Filtre à liquide selon l'une des revendications 1 ou 2,
caractérisé en ce que
- sur le fond (82) de sa partie de boîtier (81) en forme de coupe, le boîtier (12) du filtre (80) présente le raccord de départ (19) et un raccord de désaération (52) qui se trouve au centre,
- sur le couvercle qui obture la partie (81) du boîtier, sont disposés, au centre, le raccord de réservoir (17) et, de façon décalée radialement par rapport à celui-ci, le raccord d'arrivée (16), et
- à l'intérieur sur le couvercle (83) le régulateur de pression (11) est disposé de façon sensiblement coaxiale par rapport au raccord de réservoir (17).

8. Filtre à liquide selon la revendication 7,
caractérisé en ce que
l'emplacement d'insertion (39) de la membrane (41) est disposé directement sur le couvercle (83) et sert en même temps à fixer un tube de ventilation (85, 101), qui forme la chambre de ressort (48) du régulateur de pression (11), et qui relie par son intérieur cette chambre de ressort (48) au raccord de désaération (52) par un canal (88) servant à la désaération.

9. Filtre à liquide selon la revendication 7 ou 8,
caractérisé en ce que
- l'emplacement d'insertion (39) est disposé sur une nervure annulaire (84) faisant saillie axialement vers l'intérieur sur le couvercle (83), nervure qui présente des passages radiaux (89) pour relier le côté propre (28) de l'élément de filtre (21) à la chambre de pression (45) du régulateur de pression (11) et qui est entourée par une bague d'appui (95), qui prend appui de façon étanche entre le couvercle (83) et le chapeau terminal de l'élément de filtre (21) tourné de ce côté et qui, pour séparer le côté sale (27), se trouve du côté propre (28) radialement entre le raccord de réservoir (17) et le raccord d'arrivée (16), et
- une bague de maintien (97) entre le chapeau terminal situé du côté propre et le fond (82) sépare le raccord de départ (19) du côté sale (27).

10. Filtre à liquide selon l'une des revendications 8 ou 9,
caractérisé en ce que
- le tube de ventilation (85, 101) est fixé de façon étanche par une bride (86), qui s'étend radialement, dans l'emplacement d'insertion (39), et se transforme en une section de manchon évasée (87) qui forme la chambre de ressort (48), et
- la section de manchon (87) se transforme en une pièce tubulaire (88; 103) de plus petit diamètre, dont on fait passer l'extrémité libre de façon étanche dans le fond (82).

11. Filtre à liquide selon l'une des revendications 8 à 10,
caractérisé en ce que
le tube de ventilation (85) est monté d'un seul tenant et est en particulier réalisé en matière plastique.

12. Filtre à liquide selon l'une des revendications 8 à 10,
caractérisé en ce que
le tube de ventilation (101) se compose d'un boîtier métallique de ressort (102) et d'un tube flexible en matière plastique (103).
